# EUROPÄISCHE PATENTSCHRIFT

(11) **EP 3 679 284 B1**
(45) Veröffentlichungstag und Bekanntmachung des Hinweises auf die Patenterteilung: **12.07.2023**
(21) Anmeldenummer: 18762811.0
(22) Anmeldetag: 27.08.2018
(51) Int. Cl.: F16L 13/02, F16L 13/10, F16L 25/00, F16L 33/34, F16L 47/02, B23K 20/12, B29C 65/06

(54) **ROHRVORRICHTUNG MIT STOFFSCHLÜSSIGER VERBINDUNG**
PIPE DEVICE HAVING A BONDED JOINT
DISPOSITIF À TUBE AVEC RACCORDEMENT PAR LIAISON DE MATIÈRE

(30) Priorität: 04.09.2017 DE 102017120305
(43) Veröffentlichungstag der Anmeldung: 15.07.2020
(73) Patentinhaber: NORMA Germany GmbH, 63477 Maintal (DE)
(72) Erfinder: KULLIK, Sven, 63505 Langenselbold (DE)
(74) Vertreter: Patentanwälte Olbricht Buchhold Keulertz
(86) Internationale Anmeldenummer: PCT/EP2018/073038
(87) Internationale Veröffentlichungsnummer: WO 2019/042944

(56) Entgegenhaltungen:
- EP-A2- 1 503 128
- EP-A2- 1 640 141
- DE-A1- 10 322 090
- DE-A1-102008 017 922
- DE-A1-102010 030 718
- DE-T2- 69 823 351
- US-A1- 2007 222 214
- US-A1- 2008 012 309

## Beschreibung

Die Erfindung betrifft eine Rohrvorrichtung gemäß dem Oberbegriff von Anspruch 1.

Aus dem Stand der Technik sind Rohrvorrichtungen bekannt, die ein Rohr bzw. eine Rohrleitung und ein Verbindungselement aufweisen. Das Verbindungselement dient dem Anschluss des Rohres an ein Anschlussobjekt wie beispielsweise ein weiteres Rohr, ein Gefäß, ein Gehäuse, eine Pumpe oder ähnliches. Die Verbindung zwischen dem Rohr und dem Verbindungselement ist meist nicht für eine wiederholte Demontage ausgebildet. Dahingegen dient das andere Ende des Verbindungselements meist einer schnellen und einfachen sowie demontierbaren Verbindung.

Eine derartige Rohrvorrichtung wird beispielsweise in DE 20 2009 000 328 U1 beschrieben. Hier ist vorgesehen, das Rohr auf einen Stutzen des Verbindungselementes aufzuschieben. Umlaufende Haltenasen auf dem Stutzen verhindern nach dem Aufschieben ein Abrutschen des Rohrs vom Stutzen. Außerdem verfügt das Verbindungselement an dem Ende, das vom Stutzen abgewendet ist, über mechanische Koppelmittel zur formschlüssigen Verbindung mit einem Anschlussobjekt.

Nachteilhaft an dieser Ausgestaltung ist, dass die Verbindung zwischen dem Rohr und dem Verbindungselement nur mittlere Zugkräfte aufnehmen kann, nur geringe Torsionsmomente übertragen kann und Leckagen auftreten können. Deswegen ist es oftmals notwendig teure und komplex montierbare Hilfsmittel wie Schellen zur Erhöhung der Dichtigkeit sowie der Zug- und Torsionsfestigkeit einzusetzen, die den Problemen aber nur teilweise abhelfen. Eine weitere Rohrvorrichtung wird in DE 10 2008 017922 A1 beschrieben.

Aufgabe der Erfindung ist es daher, die Nachteile des Standes der Technik zu überwinden, und eine Rohrvorrichtung zu entwickeln, welche eine hohe Dichtigkeit aufweist und hohen Zug- und Torsionskräften standhält. Die Rohrvorrichtung soll außerdem einfach in der Handhabung, langlebig und kostengünstig sein.

Hauptmerkmale der Erfindung sind im kennzeichnenden Teil von Anspruch 1 angegeben.

Ausgestaltungen sind Gegenstand der Ansprüche 2 bis 14. Bei einer Rohrvorrichtung mit beziehungsweise einer Rohrverbindung zwischen einem Rohr und einem Verbindungselement, wobei das Rohr einen Rohrmantel mit einer Innenfläche und einer Außenfläche aufweist und einen Strömungskanal ausbildet, wobei das Verbindungselement einen Durchgangskanal ausbildet, der sich von einem Stutzen aus einem ersten Material und mit einer ersten Öffnung zu einer zweiten Öffnung erstreckt, und wobei der Rohrmantel mit einem ersten Rohrende aus einem zweiten Material auf dem Stutzen sitzt, sieht die Erfindung vor, dass in einer Kontaktzone zwischen der Innenfläche des Rohrmantels und einer Umfangsfläche des Stutzens eine stoffschlüssige Verbindung zwischen dem ersten Material und dem zweiten Material ausgebildet ist, insbesondere eine Fügeverbindung, und insbesondere unmittelbar zwischen dem ersten Material und dem zweiten Material.

Vorteilhaft an der stoffschlüssigen Verbindung sind eine hohe Zugfestigkeit, eine hohe Torsionsfestigkeit und geringe Leckageraten zwischen dem Verbindungselement und dem Rohr.

Als Rohre sind insbesondere längliche Hohlkörper zu verstehen, die unflexibel oder flexibel bis hin zu schlauchartig ausgebildet sein können.

Grundsätzlich ist es möglich, dass das Verbindungselement aus dem ersten Material besteht und/oder dass das Rohr aus dem zweiten Material besteht. Es sind jedoch auch Ausbildungen möglich, bei welchen das Rohr und/oder das Verbindungselement abweichende Materialien abseits der Kontaktzone aufweisen.

Vorzugsweise ist die stoffschlüssige Verbindung flüssigkeitsdicht und/oder gasdicht bzw. fluiddicht ausgebildet, und weiter bevorzugt sind keine zusätzlichen Dichtmittel zwischen dem Rohr und dem Verbindungselement angeordnet oder ausgebildet. Hierdurch sind die Herstellkosten gering.

Erfindungsgemäß können das erste Material und das zweite Material gleich oder unterschiedlich sein. So eignen sich beispielsweise als erstes Material PA 666, PA 66, PPA und PA 12. Als zweites Material kommen beispielsweise PPA und PA 12 in Betracht.

Gemäß einer näheren Ausgestaltung liegt das erste Rohrende des Rohrmantels an einem Anschlag des Stutzens an. Hierdurch ist die Montage prozesssicher durchführbar und eine Längsstauchung des ersten Rohrendes bei der Montage möglich.

In einer speziellen Ausführungsform weist der Stutzen einen Anschlag auf und das erste Material des Anschlags ist mit dem zweiten Material des ersten Rohrendes stoffschlüssig verbunden. Hierdurch wird die Fläche der möglichen stoffschlüssigen Verbindung vergrößert und es sind eine hohe Zugfestigkeit, eine hohe Torsionsfestigkeit und geringe Leckageraten erzielbar.

Bei einer optionalen Gestaltung weist der Stutzen eine Umfangsmanschette auf, wobei zwischen der Umfangsmanschette und der Umfangsfläche des Stutzens ein Ringspalt ausgebildet ist, in den das erste Rohrende hineinragt. Hierzu sollte der Ringspalt in Längsrichtung sowie in Richtung des Rohrmantels offen ausgebildet sein. Der Ringspalt kann dann auch als Ringnut bezeichnet werden. Durch die Umfangsmanschette ist es möglich, die stoffschlüssige Verbindung, z.B. eine Verschweißung, in dem Ringspalt zu verdichten, was zu einer Festigkeitserhöhung führt. Zudem wird durch die Umfangsmanschette bei einem Schmelzen des ersten und/oder zweiten Materials ein Schmelzeaustrieb nach außen hin unterbunden. Die Rohrvorrichtung sieht hierdurch technisch sauber aus und genügt ästhetischen Ansprüchen.

Vorzugsweise ist der Ringspalt breiter ausgebildet als die Wandstärke des ersten Rohrendes vor dem Aufschieben auf die Umfangsfläche des Stutzens beträgt, wobei sich die Wandstärke bei gewellter Innenfläche und/oder gewellter Außenfläche des Rohrmantels vom kleinsten Innenmesser bis zum größten Außendurchmesser bestimmt. Damit ist die Umfangsmanschette beim Aufschieben des Rohrendes auf den Stutzen zunächst nicht hinderlich.

Gemäß einer optionalen Ausgestaltung ist das erste Material der Umfangsmanschette mit dem zweiten Material des ersten Rohrendes stoffschlüssig verbunden. Hierdurch wird die Fläche der möglichen stoffschlüssigen Verbindung vergrößert und es sind eine hohe Zugfestigkeit, eine hohe Torsionsfestigkeit und geringe Leckageraten erzielbar.

Es bietet sich an, die Umfangsmanschette mit einer im Wesentlichen zylindrischen Innenfläche auszubilden. Hierdurch gelingt eine einfache Entformung bzw. Herstellung des Ringspaltes. Zumindest Entformungsschrägen und Einführschrägen sollen von der Bezeichnung "im Wesentlichen" miterfasst sein.

Weiterhin können in der Umfangsmanschette ein oder mehrere Löcher ausgebildet sein, wobei die Löcher vorzugsweise über den Umfang der Umfangsmanschette verteilt angeordnet sind. Hierdurch können Luft oder Gase bei dem Einführen des Rohrendes in den Ringspalt aus letzterem entweichen.

Nach einer bevorzugten Ausführung ist die stoffschlüssige Verbindung (bzw. die stoffschlüssigen Verbindungen oder Verbindungsbereiche) zwischen dem ersten Material und dem zweiten Material durch Schmelzen und Aushärten des ersten Materials und/oder durch Schmelzen und Aushärten des zweiten Materials ausgebildet. Hierdurch entsteht eine stabile Verbindung. Es ist beispielsweise möglich, nur ein Material aufzuschmelzen und in das andere Bauteil, d.h. das Rohr oder das Verbindungselement, einsickern zu lassen, um Haftschluss in Kombination mit einer formschlüssigen Verbindung zu erzielen. Es sind zudem Fügevarianten möglich, bei denen das erste Material und das zweite Material in der stoffschlüssigen Verbindung (bzw. in den stoffschlüssigen Verbindungen oder Verbindungsbereichen) in einander eingedrungen sind und/oder in einander diffundiert sind und/oder miteinander vermischt sind. Eine besonders feste und dichte Verbindung gelingt, wenn das erste und das zweite Material zur gleichen Zeit geschmolzen und ausgehärtet werden.

In einer besonderen Ausführungsvariante ist die stoffschlüssige Verbindung zwischen dem ersten Material und dem zweiten Material durch Rotationsschweißen hergestellt. Dies ist kostengünstig und prozesssicher. Am Produkt lässt sich die Anwendung eines Rotationsschweißens durch sich windende Mikrostrukturen in der Fügezone nachweisen. Unter einem Rotationsschweißen ist ein Fügen eines ersten vorzugsweise rotationssymmetrischen Objekts mit einem zweiten vorzugsweise rotationssymmetrischen Objekt zu verstehen, wobei eine Relativrotation zwischen dem ersten und zweiten Objekt während des Fügens durchgeführt wird. Meist wird hierzu nur eines der beiden Objekte rotiert und das andere Objekt nicht. Bei der Relativrotation entsteht Reibung und damit Reibungswärme zwischen dem ersten und zweiten Objekt, welche zu einem Schmelzen führt. Die entstehende Reibungswärme lässt sich zudem durch Druckkräfte zwischen den beiden Objekten maßgeblich beeinflussen. Zum Aushärten, wird die Relativrotation gestoppt. Das Aushärten kann durch Kühlmaßnahmen beschleunigt werden. Vorliegend ist es zu bevorzugen, das Rohr zu fixieren und das Verbindungselement zu rotieren.

Eine Festigkeitserhöhung der Verbindung lässt sich hierbei insbesondere dadurch erzielen, dass das erste Rohrende des Rohrmantels durch das Aufschieben auf den Stutzen und ein optionales Anschlagen an dem Anschlag des Stutzens umgeschlagen ist. Das Umschlagen vergrößert die Kontaktfläche und damit die Fläche der stoffschlüssigen Verbindung. Durch ein Umschlagen kann auch eine stoffschlüssige Verbindung mit der optionalen Umfangsmanschette erreicht werden. Das erste Rohrende des Rohrmantels wies vor dem Aufschieben auf die Umfangsfläche des Stutzens eine gewellte Innenfläche und optional eine gewellte Außenfläche auf. Diese Ausführung ist also insbesondere für den Einsatz von Wellrohren ohne glatten Rohrstutzen gedacht, die eine höhere Biegeelastizität als glatte Rohre aufweisen. Es kommen grundsätzlich auch abweichende Rohrformen in Betracht. So kann der Rohrmantel benachbart zum ersten Rohrende beispielsweise eine zylindrische Innenfläche und/oder eine zylindrische Außenfläche aufweisen, oder aber der Rohrmantel weist benachbart zum ersten Rohrende eine gewellte Innenfläche und/oder eine gewellte Außenfläche auf. Die Verbindung gelingt also auch bei glatten Rohren, die ein erstes Rohrende in Form eines Wellrohres aufweisen, sowie bei Wellrohren, die ein erstes Rohrende mit vorzugsweise zylindrischem Glattrohrstutzen aufweisen.

Die größten wirtschaftlichen Vorteile werden erzielt, wenn endlos extrudierte Wellrohre ohne Glattbereiche verwendet werden. Bei dieser Variante ist es außerdem möglich, direkt nach dem Verbindungselement in eine Rohrbiegung des Rohres überzugehen. Hierdurch wird wenig Bauraum benötigt.

Bei Wellrohren sind vom Rohrmantel Wellenberge und Wellentäler auf der Innenfläche und/oder der Außenfläche ausgebildet. Ein solches Rohr ist in beliebiger Länge ablängbar und mit dem Verbindungselement verbindbar.

Gemäß einer speziellen Rohrvorrichtung weisen die gewellte Innenfläche und/oder die gewellte Außenfläche am ersten Rohrende nach dem Aufschieben auf die Umfangsfläche (des Stutzens) verkürzte Bergabstände und/oder Talabstände auf. Diese resultieren aus einer Stauchung des Wellrohres beim Aufschieben. Hierdurch wird die Kontaktfläche zur Ausbildung der stoffschlüssigen Verbindung vergrößert. In Kombination mit einer optionalen Umfangsmanschette, kann die Stauchung dazu genutzt werden, dass die äußeren Wellenberge in Kontakt mit der Innenseite der Umfangsmanschette treten. Das erhöht den Druck im Bereich der Umfangsfläche, was sich insbesondere beim optionalen Rotationsschweißen positiv auswirkt, weil damit mehr Reibungswärme entsteht. Außerdem kann der Druck genügen, um beim optionalen Rotationsschweißen auch eine stoffschlüssige Verbindung zwischen der Innenseite der Umfangsmanschette und dem ersten Rohrende auszubilden.

Des Weiteren ist bei einer besonderen Ausgestaltung vorgesehen, dass sich zumindest ein Abschnitt der Umfangsfläche des Stutzens ausgehend von der ersten Öffnung sowie mit zunehmendem Abstand von der ersten Öffnung von einem minimalen Durchmesser bis zu einem maximalen Durchmesser aufweitet. Hierdurch wird einerseits eine einfache Montage des Rohres durch eine Einführschräge ermöglicht. Außerdem kann durch die Einführschräge auch eine Druckkraft auf die Innenwandung des Rohrmantels aufgebracht werden. Das erhöht die Dichtigkeit und ermöglicht bei einem optionalen Rotationsschweißen durch die Radialspannung im Rohrmantel eine Erhöhung der Reibungswärme. Dies lässt sich insbesondere mit einer speziellen Ausführung erreichen, bei welcher der minimale Durchmesser kleiner und der maximale Durchmesser größer als der Durchmesser der Innenfläche des Rohrmantels ist.

Je nach Einsatzort kommen Gestaltungen des Verbindungselementes in Betracht, bei denen der Durchgangskanal zwischen der ersten und zweiten Öffnung des Verbindungselements gerade ausgebildet ist oder eine Richtungsänderung von bevorzugt wenigstens 10 Grad und bevorzugt maximal 180 Grad aufweist. Richtungsänderungen unter 10 Grad werden vorzugsweise durch Biegung des Rohres hinter dem Stutzen ausgebildet. Für diese kleinen Richtungsänderungen sind daher tendenziell keine speziell angefertigten Verbindungselemente notwendig.

Ferner weist das Verbindungselement bei einer besonderen Ausführung im Bereich der zweiten Öffnung Koppelmittel zur formschlüssigen Anbindung eines Anschlussobjekts auf. Damit lässt sich das Rohr mit dem Verbindungselement einfach an ein Anschlussobjekt wie beispielsweise ein weiteres Rohr, ein Gefäß, ein Gehäuse, eine Pumpe oder ähnliches anschließen. Vorzugsweise weisen die Koppelmittel Rastmittel auf. Damit gelingt eine einfache und sichere Verbindung. Um eine flüssigkeitsdichte und/oder gasdichte bzw. fluiddichte und lösbare Verbindung zu erzielen, sollte im Bereich der zweiten Öffnung ein Dichtring angeordnet und/oder eine Dichtfläche ausgebildet sein. Eine einfache Montage ist beispielsweise möglich, wenn das Verbindungselement im Bereich der zweiten Öffnung als Stecker oder Steckerkupplung ausgebildet ist.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen Längsschnitt durch eine Rohrvorrichtung mit einem Wellrohr ohne einen glatten Endstutzen und einem Verbindungselement;
- Fig. 2: einen Längsschnitt durch eine Rohrvorrichtung mit einem Wellrohr mit einem glatten Endstutzen, der nicht unter die Erfindung fällt, und einem Verbindungselement; und
- Fig. 3: eine perspektivische Ansicht eines Verbindungselements.

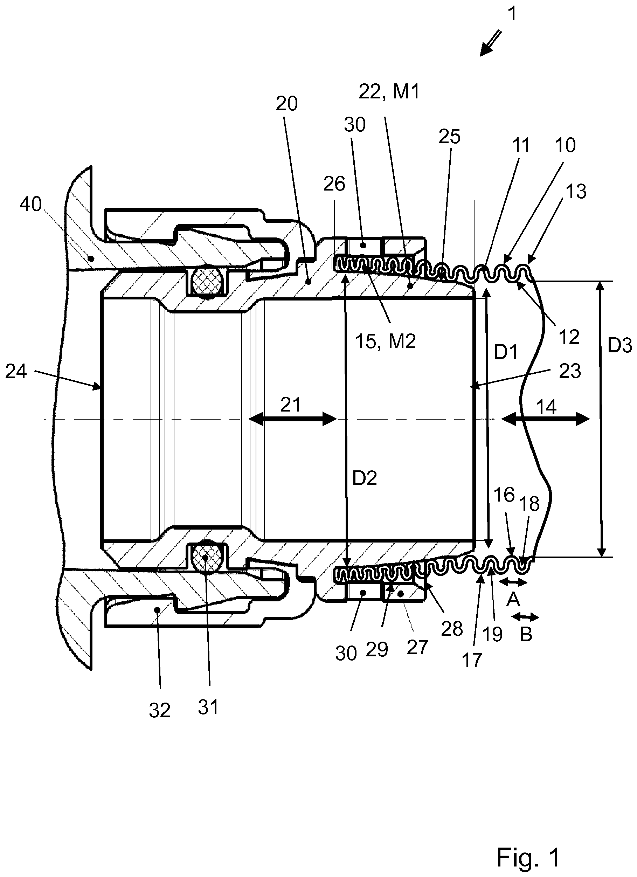

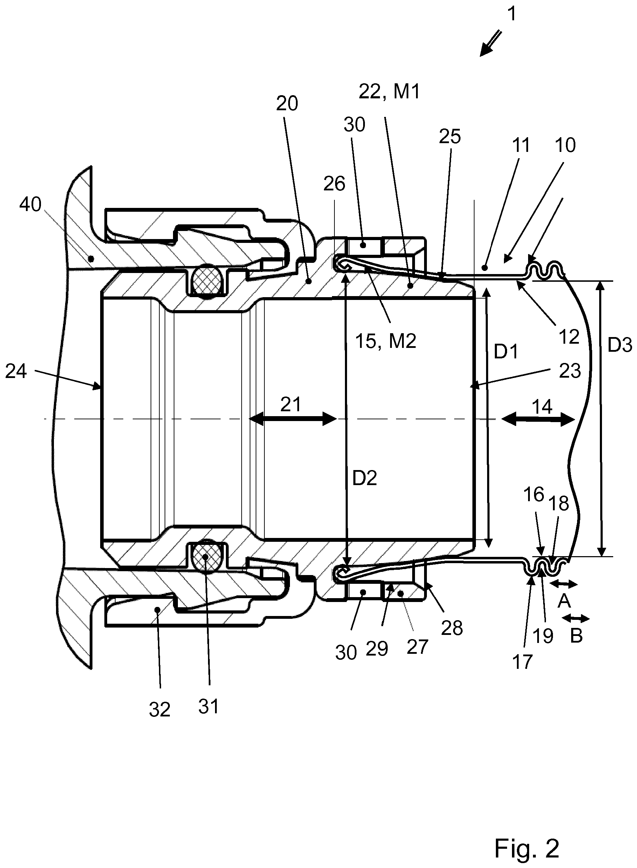

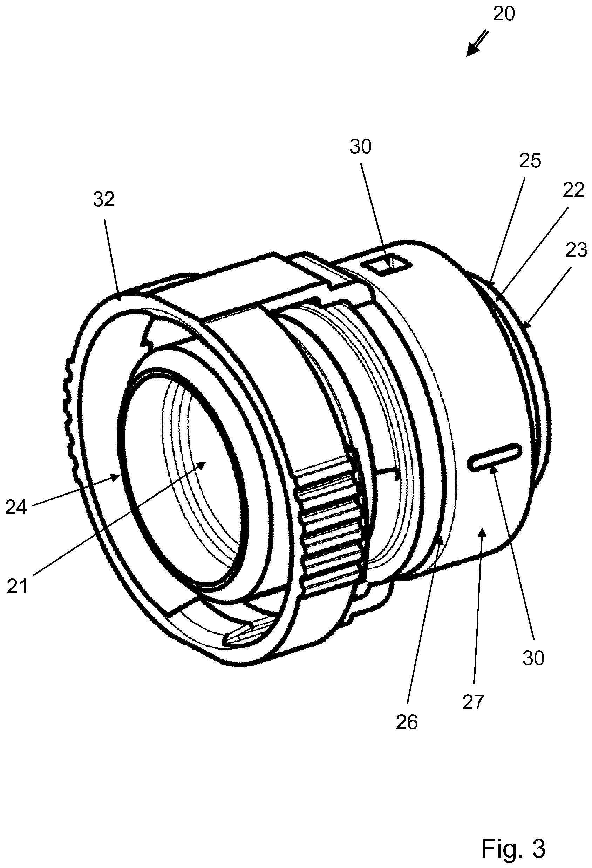

Die **Fig. 1** **und** **2** zeigen jeweils in einem Längsschnitt eine Rohrvorrichtung 1 mit (beziehungsweise eine Rohrverbindung zwischen) einem Rohr 10, welches ein Wellrohr ist, und einem Verbindungselement 20. Das Verbindungselement 20 ist zudem in **Fig. 3** in einer perspektivischen Ansicht gezeigt.

Das Verbindungselement 20 gemäß den **Fig. 1****,** **2** **und** **3** bildet einen Durchgangskanal 21 aus, der sich von einem Stutzen 22 mit einer ersten Öffnung 23 zu einer zweiten Öffnung 24 erstreckt. Der Durchgangskanal 21 ist gerade ausgebildet, das heißt er führt keine Richtungsänderung durch. Der Stutzen 22 bildet eine Umfangsfläche 25 aus und weist einen Anschlag 26 und eine Umfangsmanschette 27 auf. Zwischen der Umfangsmanschette 27 und der Umfangsfläche 25 des Stutzens 22 ist ein Ringspalt 28 ausgebildet. Der Ringspalt 28 ist in Längsrichtung des Durchgangskanals 21 sowie in Richtung der ersten Öffnung 23 offen ausgebildet. Dabei hat die Umfangsmanschette 27 eine zylindrische Innenfläche 29 und eine Einführschräge. Außerdem sind in der Umfangsmanschette 27 Löcher 30 ausgebildet, die über den Umfang der Umfangsmanschette 27 verteilt angeordnet sind. Wie insbesondere in Fig. 3 ersichtlich ist, haben die Löcher 30 unterschiedliche Formen. Ein Abschnitt der Umfangsfläche 25 des Stutzens 22 weitet sich ausgehend von der ersten Öffnung 23 sowie mit zunehmendem Abstand von der ersten Öffnung 23 von einem minimalen Durchmesser D1 bis zu einem maximalen Durchmesser D2 auf.

Des Weiteren weist das Verbindungselement 20 im Bereich der zweiten Öffnung 24 Koppelmittel 32 zur formschlüssigen Anbindung eines Anschlussobjekts 40 auf. Nach den Fig. 1 und 2 verfügen die Koppelmittel 32 und das Anschlussobjekt 40 erkennbar jeweils über Hinterschnitte, die miteinander in Eingriff stehen. Die Fixierung lässt sich durch einen einrastenden Fixierring des Verbindungselements 20 arretieren und lösen. Im Bereich der zweiten Öffnung 24 ist von dem Verbindungselement 20 ein Dichtungssitz ausgebildet, in dem ein Dichtring 31 angeordnet ist. Dieser korrespondiert mit einer Dichtfläche des Anschlussobjekts 40. Das Verbindungselement 20 ragt mit dem Bereich der zweiten Öffnung 24 in das Anschlussobjekt 40 hinein und kann daher als Stecker bezeichnet werden.

Das Rohr 10 ist nur in den Fig. 1 und 2 jedoch nicht in Fig. 3 dargestellt. Es hat einen Rohrmantel 11 mit einer Innenfläche 12 und einer Außenfläche 13 und bildet einen Strömungskanal 14 aus. Der Rohrmantel 11 bildet ein erstes Rohrende 15 aus, das auf dem Stutzen 22 des Verbindungselements 20 sitzt. Dabei ragt das erste Rohrende 15 in den Ringspalt 28 zwischen der Umfangsmanschette 27 und der Umfangsfläche 25 des Stutzens 22 hinein.

Der Stutzen 22 und auch der Rest des Verbindungselementes 20 besteht aus einem ersten Material M1 und das erste Rohrende 15 sowie der Rest des Rohrmantels 11 aus einem zweiten Material M2. In einer Kontaktzone zwischen der Innenfläche 12 des Rohrmantels 11 und der Umfangsfläche 25 des Stutzens 22 ist eine stoffschlüssige Verbindung zwischen dem ersten Material M1 und dem zweiten Material M2 ausgebildet, das heißt ohne zusätzliche Materialien wie Adhäsive oder dergleichen. Das erste Material M1 und das zweite Material M2 können gleich oder unterschiedlich sein. Der Stutzen 22 und das erste Rohrende 15 sind gefügt und nicht einteilig ausgebildet.

Das erste Rohrende 15 des Rohrmantels 11 liegt an dem Anschlag 26 des Stutzens 22 an. Das erste Material M1 des Anschlags 26 und das zweite Material M2 des ersten Rohrendes 15 sind auch hier stoffschlüssig verbunden. Zudem ist das erste Material M1 der Umfangsmanschette 27 stoffschlüssig mit dem zweiten Material M2 des ersten Rohrendes 15 verbunden.

Durch die stoffschlüssige Verbindung ist eine zugfeste, drehfeste und flüssigkeitsdichte und/oder gasdichte bzw. fluiddichte Verbindung ausgebildet. Es sind auch keine zusätzlichen Dichtmittel zwischen dem Rohr 10 und dem Verbindungselement 20 angeordnet oder ausgebildet.

Herstellbar ist die stoffschlüssige Verbindung (bzw. die stoffschlüssigen Verbindungen oder Verbindungsbereiche) zwischen dem ersten Material M1 und dem zweiten Material M2 durch Schmelzen und Aushärten des ersten Materials M1 und/oder durch Schmelzen und Aushärten des zweiten Materials M2. Dies geschieht vorzugsweise durch Rotationsschweißen. Hierzu ist die Umfangsfläche 25 rotationssymmetrisch ausgebildet und das erste Rohrende 15 ist rund ausgebildet. Außerdem ist der Ringspalt 28 breiter ausgebildet als die Wandstärke des ersten Rohrendes 15 vor dem Aufschieben auf die Umfangsfläche 25 des Stutzens 22 beträgt. Bei gewellter Innenfläche 12 und gewellter Außenfläche 13 des Rohrmantels 11 gemäß Fig. 1 bestimmt sich die Wandstärke vom kleinsten Innenmesser bis zum größten Außendurchmesser. Der minimale Durchmesser D1 der Umfangsfläche 25 ist kleiner und der maximale Durchmesser D2 der Umfangsfläche 25 größer als der minimale Durchmesser D3 der Innenfläche 12 des Rohrmantels 11. Hierdurch wird das erste Rohrende 15 beim Aufschieben auf den Stutzen 22 und unter einer Relativrotation des Rohres 10 zum Verbindungselement 20 geweitet. Dies erhöht die Radialspannung im Rohrmantel 11 und die Reibungswärme in der Kontaktzone zur Umfangsfläche 25. Vorzugsweise ist das Rohr 10 drehfest gehalten und das Verbindungselement 20 wird rotiert. Durch die Reibungswärme werden das erste Material M1 und/oder das zweite Material M2 geschmolzen.

Sobald das erste Rohrende 15 beim Aufschieben am Anschlag 26 anschlägt, staucht sich das erste Rohrende 15 zusammen. Hierdurch tritt das erste Rohrende 15 auch mit der Innenfläche 29 der Umfangsmanschette 27 in Kontakt und es entsteht Reibungswärme die zum Anschmelzen des ersten und/oder zweiten Materials M1, M2 genutzt werden kann.

Sobald die Relativrotation gestoppt wird, beginnen das erste Material M1 und das zweite Material M2 zu erstarren und es entsteht die stoffschlüssige Verbindung.

Gemäß **Fig. 1** wies das erste Rohrende 15 des Rohrmantels 11 vor dem Aufschieben auf die Umfangsfläche 25 des Stutzens 22 eine gewellte Innenfläche 12 und eine gewellte Außenfläche 13 auf. Im Besonderen handelt es sich bei dem gesamten Rohrmantel 11 um ein Wellrohr mit Wellenbergen 16, 17 und Wellentälern 18, 19 auf der Innenfläche 12 und der Außenfläche 13. Abseits der Kontaktzone behält der Rohrmantel 11 auch nach der Montage definierte Bergabstände A zwischen den Wellenbergen 16, 17 und Talabstände B zwischen den Wellentälern 18, 19. Dahingegen weisen die gewellte Innenfläche 12 und die gewellte Außenfläche 13 am ersten Rohrende 15 nach dem Aufschieben verkürzte Bergabstände A und Talabstände B auf. Gewissermaßen sind die Wellenberge 16, 17 und Wellentäler 18, 19 in der Art einer Ziehharmonika zusammengestaucht. Bei genügend Reibungswärme kommt es hierbei auch zu einer stoffschlüssigen Verbindung zwischen den Flanken der Wellenberge 16, 17, also zwischen unterschiedlichen Bereichen aus dem zweiten Material M2.

In der Ausführung nach **Fig. 2** wies das erste Rohrende 15 des Rohrmantels 11 vor dem Aufschieben auf die Umfangsfläche 25 des Stutzens 22 eine zylindrische Innenfläche 12 und eine zylindrische Außenfläche 13 auf. Durch das Aufschieben und Erwärmen hat sich das erste Rohrende 15 verformt. Es weitet sich über einen ersten Abschnitt anliegend an der Umfangsfläche 25 auf, hebt in einem zweiten Abschnitt von der Umfangsfläche 25 ab und ist dann am Ende des ersten Rohrendes 15 an dem Anschlag 26 des Stutzens 22 nach innen umgeschlagen bzw. eingedreht.

Benachbart zum ersten Rohrende 15 weist der Rohrmantel 11 eine gewellte Innenfläche 12 und eine gewellte Außenfläche 13 auf. Im Besonderen handelt es sich um ein Wellrohr, welches einen endseitigen glatten Abschlussstutzen aufweist. Die Wellenberge 16, 17 haben einen definierten Bergabstand A und die Wellentäler 18, 19 einen definierten Talabstand B.

Die Erfindung ist nicht auf eine der vorbeschriebenen Ausführungsformen beschränkt, sondern in vielfältiger Weise abwandelbar.

### Bezugszeichenliste

| | | | |
|---|---|---|---|
| 1 | Rohrvorrichtung | 27 | Umfangsmanschette |
| | | 28 | Ringspalt |
| 10 | Rohr | 29 | Innenfläche (Umfangsmanschette) |
| 11 | Rohrmantel | 30 | Loch |
| 12 | Innenfläche (Rohrmantel) | 31 | Dichtring |
| 13 | Außenfläche (Rohrmantel) | 32 | Koppelmittel |
| 14 | Strömungskanal | | |
| 15 | erstes Rohrende | 40 | Anschlussobjekt |
| 16 | Wellenberg (Innenfläche) | | |
| 17 | Wellenberg (Außenfläche) | A | Bergabstand |
| 18 | Wellental (Innenfläche) | B | Talabstand |
| 19 | Wellental (Außenfläche) | D1 | minimaler Durchmesser (Umfangsfläche) |
| 20 | Verbindungselement | D2 | maximaler Durchmesser (Umfangsfläche) |
| 21 | Durchgangskanal | | |
| 22 | Stutzen | D3 | Durchmesser (Innenfläche des Rohrmantels) |
| 23 | erste Öffnung | | |
| 24 | zweite Öffnung | M1 | erstes Material (Stutzen) |
| 25 | Umfangsfläche (Stutzen) | M2 | zweites Material (erstes Rohrende) |
| 26 | Anschlag (Stutzen) | | |

## Patentansprüche

1. Rohrvorrichtung (1) mit einem Rohr (10) und einem Verbindungselement (20),
• wobei das Rohr (10) einen Rohrmantel (11) mit einer gewellten Innenfläche (12) und einer Außenfläche (13) aufweist und einen Strömungskanal (14) ausbildet,
• wobei das Verbindungselement (20) einen Durchgangskanal (21) ausbildet, der sich von einem Stutzen (22) aus einem ersten Material (M1) und mit einer ersten Öffnung (23) zu einer zweiten Öffnung (24) erstreckt,
• wobei der Rohrmantel (11) mit einem ersten Rohrende (15) aus einem zweiten Material (M2) auf dem Stutzen (22) sitzt,
• wobei das erste Rohrende (15) des Rohrmantels (11) vor dem Aufschieben auf die Umfangsfläche (25) des Stutzens (22) die gewellte Innenfläche (12) aufwies,
und
• wobei in einer Kontaktzone zwischen der Innenfläche (12) des Rohrmantels (11) und einer Umfangsfläche (25) des Stutzens (22) eine stoffschlüssige Verbindung zwischen dem ersten Material (M1) und dem zweiten Material (M2) ausgebildet ist,
**dadurch gekennzeichnet, dass**
• die gewellte Innenfläche (12) am ersten Rohrende (15) nach dem Aufschieben auf die Umfangsfläche (25) des Stutzens (22) verkürzte Bergabstände (A) und/oder Talabstände (B) aufweist.

2. Rohrvorrichtung (1) nach Anspruch 1, **dadurch gekennzeichnet, dass** der Stutzen (22) einen Anschlag (26) aufweist und das erste Material (M2) des Anschlags (26) mit dem zweiten Material (M2) des ersten Rohrendes (15) stoffschlüssig verbunden ist.

3. Rohrvorrichtung (1) nach einem der Ansprüche 1 oder 2, **dadurch gekennzeichnet, dass** der Stutzen (22) eine Umfangsmanschette (27) aufweist, wobei zwischen der Umfangsmanschette (27) und der Umfangsfläche (25) des Stutzens (22) ein Ringspalt (28) ausgebildet ist, in den das erste Rohrende (15) hineinragt.

4. Rohrvorrichtung (1) nach Anspruch 3, **dadurch gekennzeichnet, dass** das erste Material (M1) der Umfangsmanschette (27) mit dem zweiten Material (M2) des ersten Rohrendes (15) stoffschlüssig verbunden ist.

5. Rohrvorrichtung (1) nach einem der vorhergehenden Ansprüche, **dadurch gekennzeichnet, dass** die stoffschlüssige Verbindung zwischen dem ersten Material (M1) und dem zweiten Material (M2) durch Schmelzen und Aushärten des ersten Materials (M1) und/oder durch Schmelzen und Aushärten des zweiten Materials (M2) ausgebildet ist.

6. Rohrvorrichtung (1) nach einem der vorhergehenden Ansprüche, **dadurch gekennzeichnet, dass** die stoffschlüssige Verbindung zwischen dem ersten Material (M1) und dem zweiten Material (M2) durch Rotationsschweißen hergestellt ist.

7. Rohrvorrichtung (1) einem der Ansprüche 1 bis 6, **dadurch gekennzeichnet, dass** das erste Rohrende (15) des Rohrmantels (11) vor dem Aufschieben auf die Umfangsfläche (25) des Stutzens (22) eine gewellte Außenfläche (13) aufwies.

8. Rohrvorrichtung (1) nach Anspruch 7, **dadurch gekennzeichnet, dass** die gewellte Außenfläche (13) am ersten Rohrende (15) nach dem Aufschieben auf die Umfangsfläche (25) des Stutzens (22) verkürzte Bergabstände (A) und/oder Talabstände (B) aufweist.

9. Rohrvorrichtung (1) Anspruch 8, **dadurch gekennzeichnet, dass** die verkürzten Bergabstände (A) und/oder Talabstände (B) aus einer Stauchung eines Wellrohrs beim Aufschieben resultieren.

10. Rohrvorrichtung (1) nach Anspruch 9 in Kombination mit Anspruch 4, **dadurch gekennzeichnet, dass** die Stauchung dazu genutzt ist, dass die äußeren Wellenberge in Kontakt mit der Innenseite (29) der Umfangsmanschette (27) treten, und durch Rotationsschweißen eine stoffschlüssige Verbindung zwischen der Innenseite (29) der Umfangsmanschette (27) und dem ersten Rohrende (15) ausgebildet ist.

11. Rohrvorrichtung (1) nach einem der vorhergehenden Ansprüche, **dadurch gekennzeichnet, dass** sich zumindest ein Abschnitt der Umfangsfläche (25) des Stutzens (22) ausgehend von der ersten Öffnung (23) sowie mit zunehmendem Abstand von der ersten Öffnung (23) von einem minimalen Durchmesser (D1) bis zu einem maximalen Durchmesser (D2) aufweitet.

12. Rohrvorrichtung (1) nach Anspruch 11, **dadurch gekennzeichnet, dass** der minimale Durchmesser (D1) kleiner und der maximale Durchmesser (D2) größer als der Durchmesser (D3) der Innenfläche (12) des Rohrmantels (11) ist.

13. Rohrvorrichtung (1) nach einem der vorhergehenden Ansprüche, **dadurch gekennzeichnet, dass** der Durchgangskanal (21) zwischen der ersten und zweiten Öffnung (23, 24) des Verbindungselements (20) gerade ausgebildet ist oder eine Richtungsänderung von bevorzugt wenigstens 10 Grad und bevorzugt maximal 180 Grad aufweist.

14. Rohrvorrichtung (1) nach einem der vorhergehenden Ansprüche, **dadurch gekennzeichnet, dass** das Verbindungselement (20) im Bereich der zweiten Öffnung (24) Koppelmittel (32) zur formschlüssigen Anbindung eines Anschlussobjekts aufweist.

## Claims

1. Pipe device (1) having a pipe (10) and having a connecting element (20),
• wherein the pipe (10) has a pipe shell (11) with a corrugated inner surface (12) and an outer surface (13) and forms a flow channel (14),
• wherein the connecting element (20) forms a through-passage channel (21) which extends from a connection piece (22) composed of a first material (M1) and having a first opening (23) to a second opening (24),
• wherein the pipe shell (11) is seated on the connection piece (22) by way of a first pipe end (15) composed of a second material (M2),
• wherein, before being pushed onto the circumferential surface (25) of the connection piece (22), the first pipe end (15) of the pipe shell (11) had the corrugated inner surface (12), and
• wherein a materially bonded connection between the first material (M1) and the second material (M2) is formed in a contact zone between the inner surface (12) of the pipe shell (11) and a circumferential surface (25) of the connection piece (22),
**characterized in that,**
• after being pushed onto the circumferential surface (25) of the connection piece (22), the corrugated inner surface (12) has shortened peak spacings (A) and/or trough spacings (B) at the first pipe end (15).

2. Pipe device (1) according to Claim 1, **characterized in that** the connection piece (22) has a stop (26), and the first material (M2) of the stop (26) is connected in a materially bonded manner to the second material (M2) of the first pipe end (15).

3. Pipe device (1) according to either of Claims 1 and 2, **characterized in that** the connection piece (22) has a circumferential collar (27), wherein, between the circumferential collar (27) and the circumferential surface (25) of the connection piece (22), there is formed an annular gap (28) into which the first pipe end (15) projects.

4. Pipe device (1) according to Claim 3, **characterized in that** the first material (M1) of the circumferential collar (27) is connected in a materially bonded manner to the second material (M2) of the first pipe end (15).

5. Pipe device (1) according to one of the preceding claims, **characterized in that** the materially bonded connection between the first material (M1) and the second material (M2) is formed by way of melting and hardening of the first material (M1) and/or by way of melting and hardening of the second material (M2) .

6. Pipe device (1) according to one of the preceding claims, **characterized in that** the materially bonded connection between the first material (M1) and the second material (M2) is produced by way of spin welding.

7. Pipe device (1) according to one of Claims 1 to 6, **characterized in that,** before being pushed onto the circumferential surface (25) of the connection piece (22), the first pipe end (15) of the pipe shell (11) had a corrugated outer surface (13).

8. Pipe device (1) according to Claim 7, **characterized in that,** after being pushed onto the circumferential surface (25) of the connection piece (22), the corrugated outer surface (13) has shortened peak spacings (A) and/or trough spacings (B) at the first pipe end (15).

9. Pipe device (1) according to Claim 8, **characterized in that** the shortened peak spacings (A) and/or trough spacings (B) result from compression of a corrugated pipe during a pushing-on process.

10. Pipe device (1) according to Claim 9, in combination with Claim 4, **characterized in that** the compression is used for the purpose that the outer corrugation peaks come into contact with the inner side (29) of the circumferential collar (27), and a materially bonded connection between the inner side (29) of the circumferential collar (27) and the first pipe end (15) is formed by way of spin welding.

11. Pipe device (1) according to one of the preceding claims, **characterized in that,** proceeding from the first opening (23) and as the distance from the first opening (23) increases, at least a portion of the circumferential surface (25) of the connection piece (22) widens from a minimum diameter (D1) to a maximum diameter (D2).

12. Pipe device (1) according to Claim 11, **characterized in that** the minimum diameter (D1) is smaller than, and the maximum diameter (D2) is larger than, the diameter (D3) of the inner surface (12) of the pipe shell (11).

13. Pipe device (1) according to one of the preceding claims, **characterized in that** the through-passage channel (21) between the first and second openings (23, 24) of the connecting element (20) is of straight form or has a change of direction of preferably at least 10 degrees and of preferably at most 180 degrees.

14. Pipe device (1) according to one of the preceding claims, **characterized in that,** in the region of the second opening (24), the connecting element (20) has coupling members (32) for form-fitting attachment of a connection object.

## Revendications

1. Dispositif tubulaire (1) avec un tube (10) et un élément de liaison (20),
- le tube (10) présentant une enveloppe tubulaire (11) avec une surface intérieure ondulée (12) et une surface extérieure (13) et formant un canal d'écoulement (14),
- l'élément de liaison (20) formant un canal de passage (21), qui s'étend depuis une tubulure (22) en un premier matériau (M1) et avec une première ouverture (23) jusqu'à une deuxième ouverture (24),
- l'enveloppe tubulaire (11) reposant sur la tubulure (22) par une première extrémité de tube (15) en un deuxième matériau (M2),
- la première extrémité de tube (15) de l'enveloppe tubulaire (11) présentant la surface intérieure ondulée (12) avant l'enfilement sur la surface périphérique (25) de la tubulure (22),
et
- dans une zone de contact entre la surface intérieure (12) de l'enveloppe tubulaire (11) et une surface périphérique (25) de la tubulure (22), une liaison de matière étant formée entre le premier matériau (M1) et le deuxième matériau (M2),
**caractérisé en ce que**
- la surface intérieure ondulée (12) à la première extrémité de tube (15) présente des distances entre les crêtes (A) et/ou des distances entre les creux (B) raccourcies après l'enfilement sur la surface périphérique (25) de la tubulure (22).

2. Dispositif tubulaire (1) selon la revendication 1, **caractérisé en ce que** la tubulure (22) présente une butée (26) et le premier matériau (M2) de la butée (26) est relié par liaison de matière au deuxième matériau (M2) de la première extrémité de tube (15).

3. Dispositif tubulaire (1) selon l'une quelconque des revendications 1 ou 2, **caractérisé en ce que** la tubulure (22) présente un manchon périphérique (27), un espace annulaire (28) étant formé entre le manchon périphérique (27) et la surface périphérique (25) de la tubulure (22), dans lequel pénètre la première extrémité de tube (15).

4. Dispositif tubulaire (1) selon la revendication 3, **caractérisé en ce que** le premier matériau (M1) du manchon périphérique (27) est relié par liaison de matière au deuxième matériau (M2) de la première extrémité de tube (15) .

5. Dispositif tubulaire (1) selon l'une quelconque des revendications précédentes, **caractérisé en ce que** la liaison de matière entre le premier matériau (M1) et le deuxième matériau (M2) est formée par fusion et durcissement du premier matériau (M1) et/ou par fusion et durcissement du deuxième matériau (M2).

6. Dispositif tubulaire (1) selon l'une quelconque des revendications précédentes, **caractérisé en ce que** la liaison de matière entre le premier matériau (M1) et le deuxième matériau (M2) est réalisée par soudage par rotation.

7. Dispositif tubulaire (1) selon l'une quelconque des revendications 1 à 6, **caractérisé en ce que** la première extrémité (15) de l'enveloppe tubulaire (11) présente une surface extérieure ondulée (13) avant l'enfilement sur la surface périphérique (25) de la tubulure (22).

8. Dispositif tubulaire (1) selon la revendication 7, **caractérisé en ce que** la surface extérieure ondulée (13) à la première extrémité de tube (15) présente des distances entre les crêtes (A) et/ou des distances entre les creux (B) raccourcies après l'enfilement sur la surface périphérique (25) de la tubulure (22).

9. Dispositif tubulaire (1) selon la revendication 8, **caractérisé en ce que** les distances entre les crêtes (A) et/ou les distances entre les creux (B) raccourcies résultent d'un écrasement d'un tube ondulé lors de l'enfilement.

10. Dispositif tubulaire (1) selon la revendication 9 en combinaison avec la revendication 4, **caractérisé en ce que** l'écrasement est utilisé pour que les crêtes d'ondulation extérieures entrent en contact avec le côté intérieur (29) du manchon périphérique (27), et une liaison de matière est formée par soudage par rotation entre le côté intérieur (29) du manchon périphérique (27) et la première extrémité de tube (15).

11. Dispositif tubulaire (1) selon l'une quelconque des revendications précédentes, **caractérisé en ce qu'**au moins une section de la surface périphérique (25) de la tubulure (22) s'élargit à partir de la première ouverture (23) et avec une distance croissante de la première ouverture (23) d'un diamètre minimal (D1) à un diamètre maximal (D2).

12. Dispositif tubulaire (1) selon la revendication 11, **caractérisé en ce que** le diamètre minimal (D1) est inférieur et le diamètre maximal (D2) est supérieur au diamètre (D3) de la surface intérieure (12) de l'enveloppe tubulaire (11).

13. Dispositif tubulaire (1) selon l'une quelconque des revendications précédentes, **caractérisé en ce que** le canal de passage (21) entre la première et la deuxième ouverture (23, 24) de l'élément de liaison (20) est configuré sous forme droite ou présente un changement de direction de préférence d'au moins 10 degrés et de préférence de 180 degrés au maximum.

14. Dispositif tubulaire (1) selon l'une quelconque des revendications précédentes, **caractérisé en ce que** l'élément de liaison (20) présente, dans la zone de la deuxième ouverture (24), des moyens de couplage (32) pour la liaison par complémentarité de forme d'un objet de raccordement.
